# EUROPÄISCHE PATENTSCHRIFT

(11) **EP 3 972 712 B1**
(45) Veröffentlichungstag und Bekanntmachung des Hinweises auf die Patenterteilung: **11.12.2024**
(21) Anmeldenummer: 20740611.7
(22) Anmeldetag: 14.07.2020
(51) Int. Cl.: B01D 29/23, B01D 29/60, B01D 35/143, B01D 35/147, B01D 37/04, B01D 35/027

(54) **FILTERVORRICHTUNG**
FILTER APPARATUS
DISPOSITIF DE FILTRATION

(30) Priorität: 25.07.2019 DE 102019005324; 25.07.2019 DE 102019005323; 25.07.2019 DE 102019005325; 25.07.2019 DE 102019005326
(43) Veröffentlichungstag der Anmeldung: 30.03.2022
(60) Teilanmeldung: 24206810.4
(73) Patentinhaber: RT-Filtertechnik GmbH, 88048 Friedrichshafen (DE)
(72) Erfinder: STEHLE, Gerhard, 78467 Konstanz (DE)
(74) Vertreter: Bartels und Partner, Patentanwälte
(86) Internationale Anmeldenummer: PCT/EP2020/069889
(87) Internationale Veröffentlichungsnummer: WO 2021/013638

(56) Entgegenhaltungen:
- DE-A1- 102011 005 943
- DE-A1- 102015 003 604
- DE-A1- 102016 013 588
- US-A- 4 654 140

## Beschreibung

Die Erfindung betrifft eine Filtervorrichtung mit einem Filtergehäuse, mit den Merkmalen im Oberbegriff von Anspruch 1.

Filtervorrichtungen dieser Art sind in einer Vielzahl von Ausgestaltungen und mit auswechselbaren Filterelementen, die unterschiedlichen Spezifikationen entsprechen, Stand der Technik. Die Filterelemente werden bei derartigen Filtervorrichtungen zur Pflege von Fluiden, insbesondere in hydraulischen Systemen, benutzt. Um die Betriebssicherheit der betreffenden Anlagen, die wesentlich von der einwandfreien Leistungsfähigkeit der Filtervorrichtungen abhängig ist, sicherzustellen, werden die betreffenden Filterelemente häufig auf ihre Schmutzaufnahmefähigkeit überwacht. Wie in dem Dokument DE 10 2015 003 604 A1, die eine Filtervorrichtung der eingangs genannten Gattung offenbart, ausgeführt ist, wird bei der bekannten Filtervorrichtung die Schmutzaufnahmefähigkeit mittels Messung des Differenzdruckes zwischen Unfiltratseite und Filtratseite überwacht, um die Gefahr zu vermeiden, dass es durch Überlastung des Filtermediums zu Betriebsstörungen oder gar zu Schäden kommen kann, was bei teuren Anlagen zu erheblichen wirtschaftlichen Einbußen führen kann.

Bei der erwähnten bekannten Lösung, die als sog. In-Tank-Filtervorrichtung ausgelegt ist, weist das Filtergehäuse einen Filterkopf auf, an dem sich außenumfangsseitig ein Befestigungsflansch befindet. Mit diesem ist der Filterkopf am Rand einer Tanköffnung derart anbringbar, dass sich ein weiteres Gehäuseteil in Form eines Abströmrohres, das sich an das untere Ende des Filterkopfes anschließt, ins Innere des betreffenden Tanks erstreckt. Für den Sensor der Verschmutzungsanzeige weist der Filterkopf am Befestigungsflansch einen radial vorstehenden Anschlussbereich auf. Der Sensor, mit einem Messgehäuse in Form einer länglichen Patrone, erstreckt sich, bezogen auf die Längsachse der Vorrichtung, in Radialrichtung vom Anschlussbereich nach außen.

Die DE 10 2016 013 588 A1 offenbart eine Filtervorrichtung mit einem Filtergehäuse, bestehend aus einem ein austauschbares Filterelement aufnehmenden Gehäusetopf, der von einem abnehmbaren Deckelteil verschlossen ist, wobei das Elementmaterial des Filterelementes einen Unfiltrat- von einem Filtratraum separiert, und mit einer Messwerterfassungseinrichtung zwecks Erfassens von Druckwerten aus mindestens einem der Räume, wobei die Messwerterfassungseinrichtung auf einer Deckelinnenseite des Deckelteils angeordnet und in diesem zumindest teilweise geführt, in das Filtergehäuse hineinragt und wobei auf der gegenüberliegenden Deckelaußenseite der Umgebung zugewandt zumindest Teile einer an die Messwerterfassungseinrichtung angeschlossenen Messwertauswerteeinrichtung angeordnet sind.

Die DE 10 2011 005 943 A1 und US 4 654 140 beschreiben weitere Filtervorrichtungen.

Ausgehend von diesem Stand der Technik stellt sich die Erfindung die Aufgabe, eine Filtervorrichtung der eingangs genannten Gattung zur Verfügung zu stellen, die einfach aufgebaut und kostengünstig herstellbar ist und die die Feststellung des Verschmutzungsgrades auf besonders vorteilhafte Weise ermöglicht.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Patentanspruchs 1 weist die Messwerterfassungseinrichtung einen zumindest teilweise von einem Sensorrohr umfassten Sensorkanal auf, das koaxial zur Längsachse des Filterelementes verlaufend, auf der Deckelinnenseite einen der Räume des Filterelementes mit einem Aufnahmeraum auf der Deckelaußenseite fluidführend verbindet, der Teil der Messwertauswerteeinrichtung ist, und durchgreift das Sensorrohr ein Bypassventil, das bei verblocktem Zustand des Elementmaterials des Filterelementes die Unfiltrat- mit der Filtratseite verbindet und dessen Ventilfeder sich zwischen der Deckelinnenseite und einem Ventilglied erstreckt, das im unverblockten Zustand eine stirnseitige Öffnung des Filterelementes verschließt.

Dadurch, dass die Messwerterfassungseinrichtung einen zumindest teilweise von einem Sensorrohr umfassten Sensorkanal aufweist, das koaxial zur Längsachse des Filterelementes verlaufend, auf der Deckelinnenseite einen der Räume des Filterelementes mit einem Aufnahmeraum auf der Deckelaußenseite fluidführend verbindet, der Teil der Messwertauswerteeinrichtung ist, sind die Messwerterfassungseinrichtung und die Messwertauswerteeinrichtung auf direktem und daher kürzestem Wege miteinander verbindbar.

Dadurch, dass das Sensorrohr ein Bypassventil durchgreift, das bei verblocktem Zustand des Elementmaterials des Filterelementes die Unfiltratmit der Filtratseite verbindet und dessen Ventilfeder sich zwischen der Deckelinnenseite und einem Ventilglied erstreckt, das im unverblocktem Zustand eine stirnseitige Öffnung des Filterelementes verschließt, ist der am Bypassventil, insbesondere an dem Ventilschließglied des Bypassventils, anstehende Fluiddruck des Unfiltrats auf einfache Weise an die Messwertauswerteeinrichtung weiterleitbar.

Weiterhin ist vorgesehen, dass die Messwerterfassungseinrichtung auf einer Deckelinnenseite des Deckelteils angeordnet und in diesem zumindest teilweise geführt in das Filtergehäuse hineinragt und dass auf der gegenüberliegenden Deckelaußenseite der Umgebung zugewandt zumindest Teile einer an die Messwerterfassungseinrichtung angeschlossenen Messwertauswerteeinrichtung angeordnet sind.

Bei der bekannten Lösung, bei der sich das Messgehäuse entlang der Oberseite einer betreffenden Tankwand vom Filterkopf seitlich weg erstreckt, ist die Zugänglichkeit demgegenüber eingeschränkt. Als besonderen Vorteil eröffnet die Anordnung der Messwerterfassungseinrichtung an der Deckelinnenseite und die Anordnung von zumindest Teilen der Messwertauswerteeinrichtung an der Deckelaußenseite die Möglichkeit, die Filtervorrichtung als In-Tank-Filtervorrichtung in besonders kostengünstiger und einfacher Bauweise auszubilden. Dadurch, dass die Messwerterfassungseinrichtung vom Deckelteil aus ins Innere des Filtergehäuses hineinragt, lässt sich die Filtervorrichtung als In-Tank-Filter mit Druckwerterfassungsfunktion ohne Filterkopf in der Weise ausbilden, dass das Deckelteil selbst sowohl den Befestigungsflansch an der Tankwand als auch die Aufnahme für das das zugehörige Ende des das Filtergehäuse vervollständigenden Gehäusetopfes bildet. Die Filtervorrichtung mit Druckwerterfassungsfunktion ist dadurch in besonders einfacher Bauweise kostengünstig herstellbar.

Bei einem weiteren vorteilhaften Ausführungsbeispiel ist vorgesehen, dass der Aufnahmeraum mit seiner Längsachse quer zur Längsachse des Filterelementes auf der Deckelaußenseite verläuft und der Aufnahme eines Drucksensors oder eines Anschlussstücks für einen außerhalb des Aufnahmeraumes befindlichen Drucksensors, jeweils als Teile der Messwertauswerteeinrichtung, dient. Dadurch ist der Drucksensor oder das Anschlussstück zumindest in Axialrichtung des Deckelteils bauraumsparend an dem Deckelteil montierbar. Zudem ist durch Drehen der Filtervorrichtung vor einer Montage am jeweiligen Einsatzort eine beliebige Ausrichtung des Aufnahmeraums vorgebbar, die ein einfaches Montieren und Demontieren des Drucksensors oder des Anschlussstücks am jeweiligen Einsatzort ermöglicht.

Bei einem weiteren vorteilhaften Ausführungsbeispiel ist vorgesehen, dass die im Aufnahmeraum jeweils eingesetzten Teile der Messwertauswerteeinrichtung als Einschraubpatrone ausgebildet sind. Dadurch lassen sich die als Einschraubpatrone ausgebildeten Teile der Messwertauswerteeinrichtung einfach und schnell am Deckelteil montieren und demontieren.

Bei einem weiteren vorteilhaften Ausführungsbeispiel ist vorgesehen, dass der Aufnahmeraum parallel zu seiner Längsachse einen Kanalabschnitt aufweist, in den der Sensorkanal mit seinem einen freien Ende ausmündet und der eine permanente Verbindung herstellt zu einem Auswertekanal, der zum Drucksensor führt. Durch den parallel zur Längsachse des Aufnahmeraums ausgerichteten Kanalabschnitt ist der durch die Messwerterfassungseinrichtung, insbesondere den Sensorkanal der Messwerterfassungseinrichtung, abgegriffene Unfiltratdruck auf dem Fluidweg zur Messwertauswerteeinrichtung drosselbar.

Bei einem weiteren vorteilhaften Ausführungsbeispiel ist vorgesehen, dass im Deckelteil ein weiterer Sensorkanal geführt ist, der fluidführend auf die Außenseite des Filterelements zu einem der beiden Räume führt und der bedarfsweise verschließbar ist. Dadurch ist einem Differenzdrucksensor für die Messung des Differenzdrucks der Druck auf der Filtratseite des Filterelements übermittelbar.

Bei einem weiteren vorteilhaften Ausführungsbeispiel ist vorgesehen, dass der weitere Sensorkanal mit seinem deckelseitigen Ende in den Aufnahmeraum im Deckelteil ausmündet, in den der Drucksensor mit seinem stirnseitigen Ende eingreift. Dadurch ist der Differenzdrucksensor an seinem stirnseitigen Ende unmittelbar vom Druck der Filtratseite beaufschlagbar.

Bei einem weiteren vorteilhaften Ausführungsbeispiel ist vorgesehen, dass der Drucksensor ein Staudruck- oder ein Differenzdrucksensor ist. Während bei der Differenzdruckmessung über den parallel zur Längsachse des Aufnahmeraums ausgerichteten Kanalabschnitt des Aufnahmeraums am Sensor der Unfiltratdruck und über den weiteren Sensorkanal am stirnseitigen Ende des Sensors der Filtratdruck wirksam ist, erfasst der Staudrucksensor ausschließlich die Druckwerte aus dem das Bypassventil durchgreifenden Sensorkanal, während der Differenzdrucksensor die Druckwerte aus beiden Sensorkanälen erfasst, von denen der weitere Sensorkanal permanent mit der Filtratseite fluidführend verbunden ist. Im Falle der Staudruckmessung kann mit Vorteil der weitere Sensorkanal durch das in diesem Fall als Stopfen ausgebildete stirnseitige Ende der Einschraubpatrone des Sensors oder des Anschlussstücks verschlossen sein.

Nachstehend ist die Erfindung anhand von in der Zeichnung dargestellten Ausführungsbeispielen im Einzelnen erläutert. Es zeigen:
- Fig. 1: eine perspektivische Schrägansicht eines Ausführungsbeispiels der erfindungsgemäßen Filtervorrichtung;
- Fig. 2: eine abgebrochen und mit zentraler vertikaler Schnittebene aufgeschnitten gezeichnete perspektivische Schrägansicht lediglich des oberen Endbereichs eines ersten Ausführungsbeispiels der Erfindung;
- Fig. 3: eine der Fig. 2 entsprechend abgebrochen und aufgeschnitten gezeichnete perspektivische Schrägansicht eines zweiten Ausführungsbeispiels der erfindungsgemäßen Filtervorrichtung; und
- Fig. 4: eine der Fig. 3 entsprechend abgebrochen und aufgeschnitten gezeichnete perspektivische Schrägansicht eines dritten Ausführungsbeispiels der erfindungsgemäßen Filtervorrichtung.

Mit Bezug auf die beigefügten Zeichnungen ist die Erfindung an Beispielen einer sogenannten In-Tank-Filtervorrichtung erläutert. Für den Einbau in einen, in den Figuren nicht dargestellten Fluidbehälter oder Tank weisen solche Vorrichtungen einen Befestigungsflansch auf, mit dem sie an einer Wandöffnung an der oberen Wand des betreffenden Tanks so anbringbar sind, dass sich ein Abströmrohr oder ein Gehäusetopf in Vertikalrichtung in das Innere des Tanks erstreckt. Der Aufbau und die Funktion einer derartigen In-Tank-Filtervorrichtung ist in der aus dem Stand der Technik bekannten DE 10 2015 003 604 A1 beschrieben.

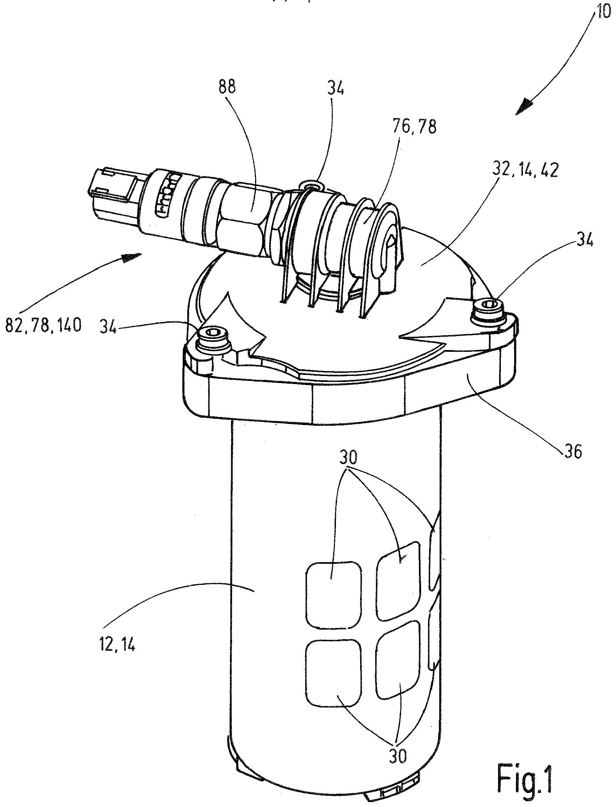

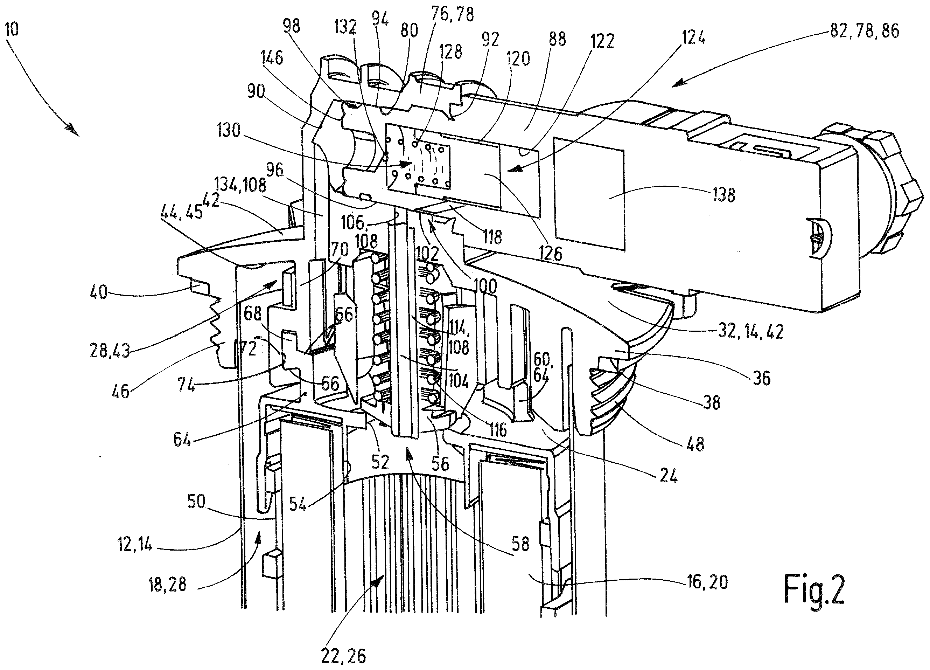

In Fig. 1 bis 4 bildet in der bei In-Tank-Filtervorrichtungen 10 üblichen Weise ein Gehäusetopf 12 einen Teil des Filtergehäuses 14, das ein austauschbares Filterelement 16 derart aufnimmt, dass der Gehäusetopf 12 das Filterelement 16 unter Bildung eines Zwischenraumes 18 umfangsseitig umgibt. In Fig. 2 bis 4 ist von dem Filterelement lediglich der obere Endabschnitt in der Zeichnung sichtbar. Das hohlzylinderförmige Filtermaterial 20 des Filterelements 16, das einen Filterhohlraum 22 umgibt, erstreckt sich in der üblichen Weise zwischen zwei Endkappen 24, von denen in Fig. 2 bis 4 lediglich die obere Endkappe 24 sichtbar ist. Beim In-Tank-Filtrierbetrieb, bei dem das Unfiltrat über die untere, in den Figuren nicht gezeigte Endkappe zum inneren Filterhohlraum 22 hin zugeführt wird, bildet dieser die Unfiltratseite 26, während der Zwischenraum 18 an der Außenseite des Filtermaterials die Filtratseite 28 bildet. Aus dieser gelangt das Filtrat über Fensteröffnungen 30 im Gehäusetopf 12 ins Innere des Tanks.

An der Oberseite ist das Filtergehäuse 14 durch ein Deckelteil 32 geschlossen, das bei der in Fig. 1 gezeigten Variante über Schrauben 34 mit einem Befestigungsflansch 36 verbunden ist.

Bei den Ausführungsbeispielen von Fig. 2 bis 4 sind Deckelteil 32 und Befestigungsflansch 36 einstückig, wobei sich an den Befestigungsflansch 36 auf seiner dem Gehäusetopf 12 zugewandten Seite, insbesondere Fläche 38, ein das Deckelteil 32 umfassender Dichtring 40 anschließt, durch den der Befestigungsflansch 36 gegenüber der Tankwand bei in eine in den Figuren nicht gezeigte Öffnung der Tankwand eingeschraubtem Deckelteil 32 abdichtbar ist.

Das Deckelteil 32, das zusammen mit dem Gehäusetopf 12 das Gesamt-Filtergehäuse 14 bildet, weist eine, insbesondere leicht, konvex gewölbte Außenseite 42 auf und begrenzt einen Innenraum 43 mit, dessen wannenförmige Decke 44 auf der Deckelinnenseite 45 eine der Wölbung der Außenseite entsprechende konvexe Wölbung besitzt. In Fig. 1 bis 4 ist der Gehäusetopf 12 mit seinem oberen Endabschnitt an einer Innenseite einer kreiszylinderförmigen Wand 46 des Deckelteils 32 geführt, die den Innenraum 43 ebenfalls mitbegrenzt. Alternativ kann der Gehäusetopf 12 an der Innenseite der Wand 46 festgelegt, beispielsweise mit der Wand 46 verklebt, sein. In Fortsetzung des Zwischenraums 18 bildet so der Innenraum 43 des Deckelteils 32 die Filtratseite 28 im Filtrierbetrieb. An der Außenseite der Wand 46 ist ein Gewinde 48 zum Einschrauben des Deckelteils 32 in die Öffnung der Tankwand vorgesehen.

Die obere Endkappe 24 des Filterelements 16, die in üblicher Weise eine Einfassung für das obere Ende des Filtermaterials 20 und das obere Ende eines Stützrohres 50 bildet, das in Form einer gitterartigen Tragstruktur an der Außenseite des Filtermaterials 20 anliegt, weist an ihrer ebenflächigen Oberseite eine zentrale Öffnung 52 auf. An der Unterseite ist die Öffnung 52 von einem Stutzen 54 umgeben, der in den inneren Filterhohlraum 22 des Filterelements 16 vorsteht. Mit ihrem Rand bildet die zentrale Öffnung 52 den Dichtsitz für einen Schließkörper 56 eines Bypassventils 58, der den am Stutzen 54 gebildeten Durchgang zwischen dem inneren Filterhohlraum 22 und dem durch das Deckelteil 32 mitbegrenzten Innenraum 43 verschließt. An ihrer Oberseite weist die Endkappe 24 eine Festlegeeinrichtung 60 auf, die zum positionierten Halten des Filterelements 16 in der eingebauten Position mit einer Halteeinrichtung 62 des Deckelteils 32 zusammenwirkt, die sich durch den Innenraum 43 des Deckelteils 32 von dem Deckelteil 32 weg erstreckt. Die Festlegeeinrichtung 60 weist drei von der Oberseite der Endkappe 24 nach oben vorstehende Festlegestege 64 auf, die in der Nähe des Umfangs der Oberseite um 120° zueinander versetzt angeordnet sind und von denen in Fig. 2 bis 4 zwei Festlegestege 64 sichtbar sind. Die Festlegestege 64 haben jeweils die Form eines zur Vorrichtungslängsachse koaxialen Kreiszylinderabschnitts und sind, wie anhand des in den Fig. 2 bis 4 linksseitig gelegenen Festlegesteges 64 ersichtlich ist, abgekröpft, so dass sie mit radialen Stufenflächen 66 in eine radial nach außen versetzte obere Endleiste 68 übergehen. Die zugeordnete, von der Decke 44 des Deckelteils 32 sich in den Innenraum 44 wegerstreckende Halteeinrichtung 62 weist für jeden der Festlegestege 64 einen über ein Fußteil 70 mit der Decke 44 verbundenen Haltekörper 72 auf, der eine koaxiale, innere Führungskulisse 74 aufweist, in die die Endleiste 68 des Festlegesteges 64 durch eine relative Drehbewegung zwischen Filterelement 16 und Deckelteil 32 einfahrbar ist. In der eingefahrenen Position ist eine Art Bajonettverschluss gebildet, bei dem die Stufenflächen 66 zusammen mit den Wandflächen der Führungskulisse 74 eine formschlüssige axiale Sicherung des Filterelements 16 bilden.

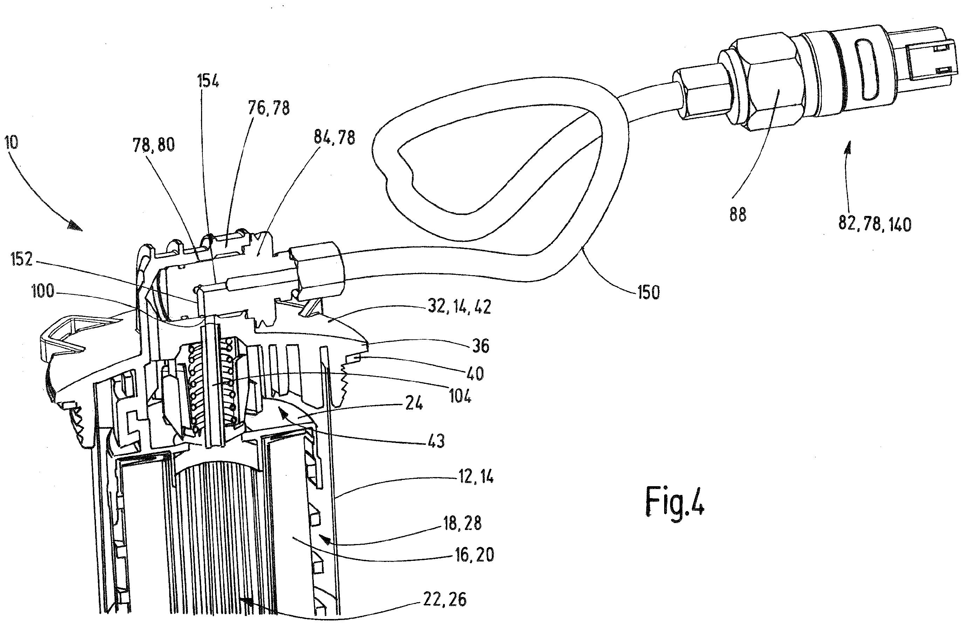

Das Ausführungsbeispiel von Fig. 2 weist einen an der Oberseite des Deckelteils 32 mittig angeordneten Aufsatz 76 auf, in dem als Teil einer Messwertauswerteeinrichtung 78 ein Aufnahmeraum 80 für einen Drucksensor 82 oder ein Anschlussstück 84 (Fig. 4) für einen außerhalb des Aufnahmeraums 80 befindlichen Drucksensor 82 vorgesehen ist, mittels dessen der Verschmutzungsgrad des Filterelements 16 feststellbar ist. Bei dem in Fig. 2 dargestellten Sensor 82 handelt es sich um einen Differenzdrucksensor 86, der ein Sensorgehäuse 88 in Form einer Einschraubpatrone aufweist. Der jeweilige Drucksensor 82 und gegebenenfalls das Anschlussstück 84 sind ebenfalls Teil der Messwertauswerteeinrichtung 78.

Der Aufnahmeraum 80 ist in Form eines Kanals ausgebildet, dessen Längsachse in Radialrichtung senkrecht zur Vorrichtungslängsachse verläuft und der ein geschlossenes Ende 90, das zur Längsachse des Deckelteils 32 oder des Filterelements 16 radial versetzt ist, sowie ein offenes Ende 92 aufweist, durch das das Sensorgehäuse 88 oder das Anschlussstück 84 in den Aufnahmeraum 80 einsetzbar ist. In der Nähe des geschlossenen Endes 90 des Kanals weist der Aufnahmeraum 80 einen Innengewindeabschnitt 94 auf, in den das Sensorgehäuse 88 oder das Anschlussstück 84 mit seinem Außengewindeabschnitt 96 einschraubbar ist, wobei ein Dichtring 98 das Sensorgehäuse 88 bzw. das Anschlussstück 84 gegenüber dem Aufnahmeraum 80 abdichtet. An den Innengewindeabschnitt 94 des Aufnahmeraums 80 schließt sich ein Verbindungs-Kanalabschnitt 100 an, in dem die Druckwertübermittlung des Unfiltratdrucks zum Sensor 32 erfolgt. Zur Bildung der entsprechenden Fluidverbindung durch den Verbindungs-Kanalabschnitt 100 weist der Aufnahmeraum 80 eine Wandvertiefung auf, die einen entlang der Innenwand des Aufnahmeraums 80 verlaufenden Querkanal 102 bildet.

Für die Druckwertübermittlung zum Verbindungs-Kanalabschnitt 100 mündet in den Querkanal 102 ein Sensorkanal 104 aus, der, von einer im Deckelteil 32 zentral gelegenen Bohrung 106 als Teil einer Messwerterfassungseinrichtung 108 ausgehend, sich koaxial zur Vorrichtungslängsachse erstreckt und das Ventilglied 56 des Bypassventils 58 durchgreift und dadurch eingangsseitig unmittelbar mit dem den Unfiltratdruck führenden Hohlraum 22 des Filterelements 16 in Verbindung ist. Von der Bohrung 106 ausgehend ist der Sensorkanal 104 durch ein Sensorrohr 114, ebenfalls als Teil der Messwerterfassungseinrichtung 108, in Form einer Führungshülse gebildet, auf dem das Ventilglied 56 des Bypassventils 58 axial bewegbar geführt ist. Das Ventilglied 56 in Form des tellerförmigen Schließkörpers ist durch eine das Sensorrohr 114 umgebende Ventilfeder in Form einer Druckfeder 116 in die am Rand der Öffnung 52 der Endkappe 24 abdichtende Schließstellung vorgespannt, so dass eine stirnseitige Öffnung des Filterelements 16 im unverblockten Zustand des Filterelements 16 verschlossen ist. Die Druckfeder 116, insbesondere Schraubendruckfeder, ist zwischen dem Ventilglied 56 und der Decke 44 des Deckelteils 32 eingespannt. Bei verblocktem Zustand des Elementmaterials 20 des Filterelements 16 wird das Ventilglied 56 durch den auf der Unfiltratseite 26 herrschenden Fluiddruck entgegen der Federkraft der Druckfeder 116 von dem Ventilsitz, nämlich vom Rand der Öffnung 52 der oberen Endkappe 24, abgehoben, wodurch das Bypassventil 58 die Unfiltrat- 26 mit der Filtratseite 28 verbindet.

Beim Ausführungsbeispiel von Fig. 2 mit Differenzdruckmessung weist das Sensorgehäuse 88 in auf den Verbindungs-Kanalabschnitt 100 ausgerichteter Position einen schräg verlaufenden Auswertekanal 118 auf, der die Fluidverbindung vom Sensorkanal 104 zu einem Druckraum 120 im Sensorgehäuse 88 herstellt, der sich im Sensorgehäuse 88 in einem Messzylinder 122 befindet. Der Unfiltratdruck, der dem Druckraum 120 im Messzylinder 122 über den Auswertekanal 118 übermittelt ist, belastet die eine Kolbenfläche 124 eines Messkolbens 126, der im Messzylinder 122 verschiebbar ist und gegen eine vom Unfiltratdruck bewirkte Verschiebebewegung durch eine Druckfeder 128 vorgespannt ist. Für die Differenzdruckmessung ist die dem Druckraum 120 entgegengesetzte weitere Kolbenfläche 130 des Messkolbens 126 vom Filtratdruck beaufschlagt. Hierfür ist das vom Druckraum 120 abgewandte Ende des Messzylinders 122 über eine Drosselbohrung 132 mit dem geschlossenen Ende 90 des Aufnahmeraums 80 in Fluidverbindung, in den der Drucksensor 82 mit seinem stirnseitigen Ende 146 eingreift. Da das geschlossene Ende 90 des Aufnahmeraums 80 am Deckelteil 32 aus der Mitte versetzt ist, ist die Fluidverbindung zwischen dem geschlossenen Ende 90 des Aufnahmeraums 80 und der Filtratseite 28 im Innenraum 43 des Deckelteils 32 durch einen weiteren Sensorkanal 134 herstellbar, der sich in Form einer vertikalen Bohrung 136 als Teil der Messwerterfassungseinrichtung 108 vom Aufnahmeraum 80 ausgehend durch die Oberseite des Deckelteils 32 hindurch über den Innenraum 43 in den Zwischenraum 18 erstreckt und dort außerhalb des Bypassventils 58 in der Filtratseite 28 ausmündet. Für die Signalerzeugung aufgrund der vom Differenzdruck bewirkten Bewegungen des Messkolbens 126 mittels eines üblichen berührungsfreien Messverfahrens, wie beispielsweise eines auf dem Hall-Effekt basierenden Messverfahrens, ist im Filtergehäuse 14 eine Sensorplatine 138 vorgesehen.

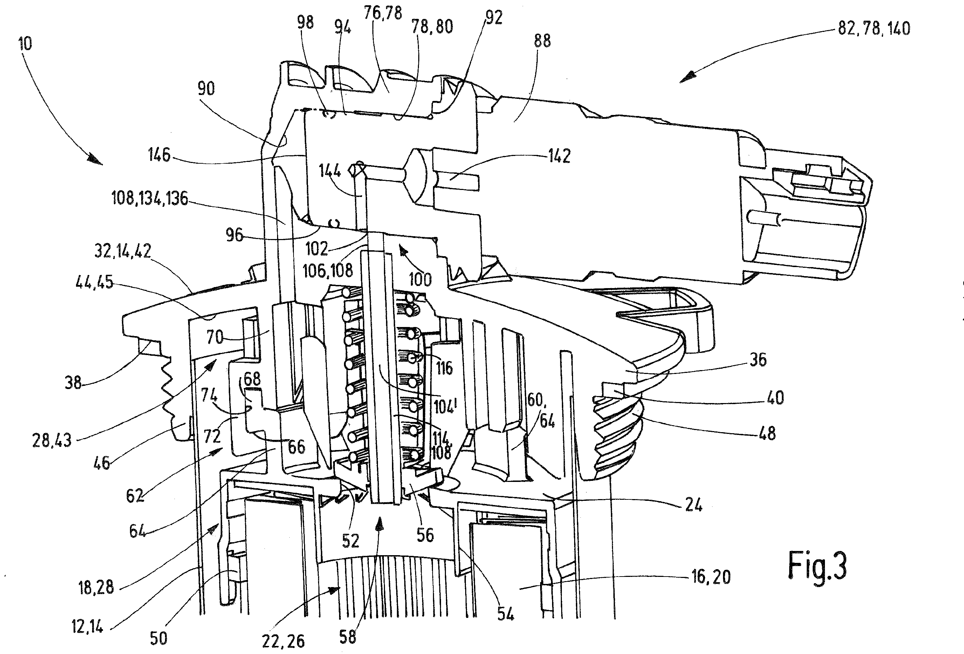

Das Ausführungsbeispiel von Fig. 3 entspricht vollinhaltlich dem Ausführungsbeispiel von Fig. 2, abgesehen davon, dass in dem auf dem Deckelteil 32 befindlichen, von dem Aufsatz 76 mitbegrenzten Aufnahmeraum 80 anstelle des für eine Differenzdruckmessung vorgesehenen Differenzdrucksensors 86 ein Staudrucksensor 140 vorgesehen ist, dessen als Einschraubpatrone ausgebildetes Sensorgehäuse 88 keinen Innenkanal als Messzylinder für einen Messkolben, sondern lediglich einen Druckwertgeber 142 für eine Staudruckmessung aufweist. Dementsprechend ist der Druckwertgeber 142 über einen weiteren Auswertekanal 144 und den Verbindungs-Kanalabschnitt 100 am Aufnahmeraum 80 unmittelbar mit dem Unfiltratdruck beaufschlagt, der vom Sensorkanal 104 übermittelt ist. Da der Filtratdruck bei der Staudruckmessung unberücksichtigt ist und somit der weitere Sensorkanal 134 funktionslos ist, ist beim Beispiel von Fig. 3 das stirnseitige Ende 146 des Sensorgehäuses 88 als Stopfen ausgebildet, der mit dem Dichtring 98 die Verbindung mit dem weiteren Sensorkanal 134 verschließt.

Das Ausführungsbeispiel von Fig. 4 entspricht im Wesentlichen dem Ausführungsbeispiel von Fig. 3, abgesehen davon, dass in dem Aufnahmeraum 80 ein als Einschraubpatrone ausgebildetes Anschlussstück 84 aufgenommen, insbesondere in diesen eingeschraubt, ist, mittels dem der am Anschlussstück 84 anstehende Unfitratdruck, der über den Sensorkanal 104 und den Verbindungs-Kanalabschnitt 100 im Filterhohlraum 22 abgegriffen wird, über eine Fluidleitung 150 an einen entfernt von dem Aufnahmeraum 80 und/oder von dem Anschlussstück 84 angeordneten Staudrucksensor 140 weitergeleitet wird, der hinsichtlich seiner Funktionsweise dem Staudrucksensor 140 aus Fig. 3 entspricht. Dafür sind in dem Anschlussstück 84 mindestens zwei senkrecht zueinander ausgerichtete, miteinander fluidführend verbundene Leitungsabschnitte 152, 154 vorgesehen, die durch jeweils eine Bohrung in das Anschlussstück 84 eingebracht sind und von denen einer 152, der sich in Richtung der Längsachse des Filterelements 16 durch das Anschlussstück 84 erstreckt, in den Verbindungs-Kanalabschnitt 100 des Ausnahmeraumes 80 einmündet und der andere 154, der sich in Richtung der Längsachse des Aufnahmeraums 80 durch das Anschlussstück 84 erstreckt, in die Fluidleitung 150 fluidführend ausmündet. Jeder der Kanalabschnitte 152, 154 kann in Richtung seines aus dem Anschlussstück 84 austretenden Endes eine Innendurchmessererweiterung, vorzugsweise in Form einer Stufe, aufweisen.

## Patentansprüche

1. Filtervorrichtung mit einem Filtergehäuse (14), bestehend aus einem ein austauschbares Filterelement (16) aufnehmenden Gehäusetopf (12), der von einem abnehmbaren Deckelteil (32) verschlossen ist, wobei das Elementmaterial (20) des Filterelementes (16) einen Unfiltrat(22)- von einem Filtratraum (18, 43) separiert, und mit einer Messwerterfassungseinrichtung (108) zwecks Erfassen von Druckwerten aus mindestens einem der Räume (18, 22, 43), wobei die Messwerterfassungseinrichtung (108) auf einer Deckelinnenseite (45) des Deckelteils (32) angeordnet und in diesem zumindest teilweise geführt, in das Filtergehäuse (14) hineinragt und wobei auf der gegenüberliegenden Deckelaußenseite (42) der Umgebung zugewandt zumindest Teile einer an die Messwerterfassungseinrichtung (108) angeschlossenen Messwertauswerteeinrichtung (78) angeordnet sind, **dadurch gekennzeichnet, dass** die Messwerterfassungseinrichtung (108) einen zumindest teilweise von einem Sensorrohr (114) umfassten Sensorkanal (104) aufweist, das koaxial zur Längsachse des Filterelementes (16) verlaufend, auf der Deckelinnenseite (45) einen der Räume (22) des Filterelementes (16) mit einem Aufnahmeraum (80) auf der Deckelaußenseite (42) fluidführend verbindet, der Teil der Messwertauswerteeinrichtung (78) ist, und dass das Sensorrohr (114) ein Bypassventil (58) durchgreift, das bei verblocktem Zustand des Elementmaterials (20) des Filterelementes (16) die Unfiltrat(26)- mit der Filtratseite (28) verbindet und dessen Ventilfeder (116) sich zwischen der Deckelinnenseite (45) und einem Ventilglied (56) erstreckt, das im unverblockten Zustand eine stirnseitige Öffnung (52) des Filterelementes (16) verschließt.

2. Filtervorrichtung nach Anspruch 1, **dadurch gekennzeichnet, dass** der Aufnahmeraum (80) mit seiner Längsachse quer zur Längsachse des Filterelementes (16) auf der Deckelaußenseite (42) verläuft und der Aufnahme eines Drucksensors (82) oder eines Anschlussstücks (84) für einen außerhalb des Aufnahmeraumes (80) befindlichen Drucksensors (82); jeweils als Teile der Messwertauswerteeinrichtung (78), dient.

3. Filtervorrichtung nach Anspruch 1 oder 2, **dadurch gekennzeichnet, dass** die im Aufnahmeraum (80) jeweils eingesetzten Teile der Messwertauswerteeinrichtung (78) als Einschraubpatrone ausgebildet sind.

4. Filtervorrichtung nach Anspruch 2 oder 3, **dadurch gekennzeichnet, dass** der Aufnahmeraum (80) parallel zu seiner Längsachse einen Kanalabschnitt (100) aufweist, in den der Sensorkanal (104) mit seinem einen freien Ende ausmündet und der eine permanente Verbindung herstellt zu einem Auswertekanal (118, 144) des Drucksensors (82).

5. Filtervorrichtung nach einem der vorstehenden Ansprüche, **dadurch gekennzeichnet, dass** im Deckelteil (32) ein weiterer Sensorkanal (134) geführt ist, der fluidführend auf die Außenseite des Filterelements (16) zu einem der beiden Filtraträume (18, 43), nämlich dem Zwischenraum (18) an der Außenseite des Filterelements (16) oder der Fortsetzung des Zwischenraums (18) im Deckelteil (32), dem Innenraum (43), führt und dass der Sensorkanal (134) bedarfsweise verschließbar ist.

6. Filtervorrichtung nach Anspruch 5, **dadurch gekennzeichnet, dass** der weitere Sensorkanal (134) mit seinem deckelseitigen Ende in den Aufnahmeraum (43) im Deckelteil (32) ausmündet, in den der Drucksensor (82) mit seinem stirnseitigen Ende (146) eingreift.

7. Filtervorrichtung nach einem der Ansprüche 2 bis 6, **dadurch gekennzeichnet, dass** der Drucksensor (82) ein Staudruck(140)- oder ein Differenzdrucksensor (86) ist.

8. Filtervorrichtung nach Anspruch 7, **dadurch gekennzeichnet, dass** der Staudrucksensor (140) ausschließlich die Druckwerte aus dem Sensorkanal (104) auf der Unfiltratseite (26) und der Differenzdrucksensor (86) die Druckwerte aus beiden Sensorkanälen (104, 134) erfasst, indem der weitere Sensorkanal (134) permanent mit der Filtratseite (28) fluidführend verbunden ist.

## Claims

1. Filter device having a filter housing (14), consisting of a housing pot (12), which accommodates a replaceable filter element (16), and which is closed by a removable cover part (32), wherein the element material (20) of the filter element (16) separates an unfiltered medium chamber (22) from a filtrate chamber (18, 43), and having a measured value acquisition device (108) for the purpose of acquiring pressure values from at least one of the chambers (18, 22, 43), wherein the measured value acquisition device (108), arranged on an inner side (45) of the cover of the cover part (32) and at least partially guided therein, protrudes into the filter housing (14) and wherein at least parts of a measured value evaluation device (78), which is connected to the measured value acquisition device (108), are arranged on the opposing outer side (42) of the cover directed towards the environment, **characterised in that** the measured value acquisition device (108) has a sensor channel (104) at least partially encompassed by a sensor tube (114), which channel, extending coaxial with the longitudinal axis of the filter element (16) connects one of the chambers (22) of the filter element (16) on the inner side (45) of the cover to a receiving chamber (80) on the outer side (42) of the cover in a fluid-conducting manner, which receiving chamber is part of the measured value evaluation device (78), and **in that** the sensor tube (114) passes through a bypass valve (58) which, when the element material (20) of the filter element (16) is blocked, connects the unfiltered medium side (26) to the filtrate side (28) and the valve spring (116) of which extends between the inner side (45) of the cover and a valve member (56), which, in the unblocked state, closes an end-face opening (52) of the filter element (16).

2. Filter device according to claim 1, **characterised in that** the receiving chamber (80) extends on the outer side (42) of the cover with its longitudinal axis transverse to the longitudinal axis of the filter element (16) and is used to accommodate a pressure sensor (82) or a connection piece (84) for a pressure sensor (82), which is located outside the receiving chamber (80); in each case as parts of the measured value evaluation device (78).

3. Filter device according to claim 1 or 2, **characterised in that** the parts of the measured value evaluation device (78) inserted in each case in the receiving chamber (80) are configured as a screw-in cartridge.

4. Filter device according to claim 2 or 3, **characterised in that** the receiving chamber (80) has a channel portion (100) parallel to its longitudinal axis into which the sensor channel (104) opens with its one free end and which establishes a permanent connection to an evaluation channel (118, 144) of the pressure sensor (82).

5. Filter device according to one of the preceding claims, **characterised in that** a further sensor channel (134) is guided in the cover part (32), which sensor channel leads in a fluid-conducting manner on the outside of the filter element (16) to one of the two filtrate chambers (18, 43), namely the intermediate chamber (18) on the outside of the filter element (16) or the continuation of the intermediate chamber (18) in the cover part (32), the inner chamber (43), and **in that** the sensor channel (134) can be closed as required.

6. Filter device according to claim 5, **characterised in that** the further sensor channel (134) opens with its cover-side end into the receiving chamber (43) in the cover part (32) in which the pressure sensor (82) engages with its end-face end (146).

7. Filter device according to one of claims 2 to 6, **characterised in that** the pressure sensor (82) is a back-pressure sensor (140) or a differential-pressure sensor (86).

8. Filter device according to claim 7, **characterised in that** the back-pressure sensor (140) records only the pressure values from the sensor channel (104) on the unfiltered medium side (26) and the differential-pressure sensor (86) records the pressure values from both sensor channels (104, 134), **in that** the further sensor channel (134) is permanently connected to the filtrate side (28) in a fluid-conducting manner.

## Revendications

1. Installation de filtration comprenant un corps (14) de filtre constitué d'un pot (12) de corps, qui reçoit un élément (16) filtrant pouvant être remplacé et qui est fermé par une partie (32) formant couvercle, qui peut être retirée, dans laquelle la matière (20) de l'élément (16) filtrant sépare un espace (22) pour du non filtrat d'un espace (18, 43) pour du filtrat, et comprenant un dispositif (108) de détection de valeurs de mesure en vue de la détection de valeurs de pression dans au moins l'un des espaces (18, 22, 43), dans laquelle le dispositif (108) de détection de valeurs de mesure est monté sur une face (45) intérieure de la partie (32) formant couvercle et y passe au moins en partie, pénètre dans le corps (14) du filtre et dans laquelle, sur la face (42) extérieure opposée du couvercle tournée vers l'environnement, sont montées au moins des parties d'un dispositif (78) d'évaluation de valeurs de mesure raccordé au dispositif (108) de détection de valeurs de mesure, **caractérisée en ce que** le dispositif (108) de détection de valeurs de mesure a un conduit (104) de capteur, qui est entouré au moins en partie d'un tube (114) de capteur, qui, en s'étendant coaxialement à l'axe longitudinal de l'élément (16) filtrant, met, sur la face (45) intérieure du couvercle, l'un des espaces (22) de l'élément (16) filtrant en communication fluidique avec un espace (80) de réception sur la face (42) extérieure du couvercle, tube qui fait partie du dispositif (78) d'évaluation de valeurs de mesure, et **en ce que** le tube (114) de capteur traverse une soupape (58) de dérivation, qui, lorsque la matière (20) de l'élément (16) filtrant est à l'état bloqué, met le côté (26) de non filtrat en communication avec le côté (28) de filtrat, et dont le ressort (116) de soupape s'étend entre la face (45) intérieure du couvercle et un élément (56) de soupape, qui, dans l'état non bloqué, ferme une ouverture (52) du côté frontal de l'élément (16) filtrant.

2. Installation de filtration suivant la revendication 1, **caractérisée en ce que** l'espace (80) de réception s'étend, par son axe longitudinal, transversalement à l'axe longitudinal de l'élément (16) filtrant sur la face (42) extérieure du couvercle et sert respectivement, comme parties du dispositif (78) d'évaluation de valeurs de mesure, au logement d'un capteur (82) de pression ou d'une pièce (84) de raccordement d'un capteur (82) de pression se trouvant à l'extérieur de l'espace (80) de réception.

3. Installation de filtration suivant la revendication 1 ou 2, **caractérisée en ce que** les parties, insérées respectivement dans l'espace (80) de réception, du dispositif (78) d'évaluation de valeurs de mesure sont constituées sous la forme de cartouches à visser.

4. Installation de filtration suivant la revendication 2 ou 3, **caractérisée en ce que** l'espace (80) de réception a, parallèlement à son axe longitudinal, un tronçon (100) de conduit, dans lequel le conduit (104) de capteur débouche par sa une extrémité libre et qui ménage une communication permanente avec un conduit (118, 144) d'évaluation du capteur (82) de pression.

5. Installation de filtration suivant l'une des revendications précédentes, **caractérisée en ce que**, dans la partie (32) formant couvercle, passe un autre conduit (134) de capteur, qui conduit fluidiquement, sur la face extérieure de l'élément (16) filtrant à l'un des deux espaces (18, 43) de filtrat, à savoir l'espace (18) intermédiaire sur la face extérieure de l'élément (16) filtrant ou le prolongement de l'espace (18) intermédiaire de la partie (32) formant couvercle, l'espace (43) intérieur, et **en ce que** le conduit (134) de capteur peut être fermé en cas de besoin.

6. Installation de filtration suivant la revendication 5, **caractérisée en ce que** l'autre conduit (134) de capteur débouche, par son extrémité du côté du couvercle, dans l'espace (43) de réception de la partie (32) formant couvercle, dans laquelle le capteur (82) de pression pénètre par son extrémité (146) du côté frontal.

7. Installation de filtration suivant l'une des revendications 2 à 6, **caractérisée en ce que** le capteur (82) de pression est un capteur (140) de pression d'accumulation ou un capteur (86) de pression différentiel.

8. Installation de filtration suivant la revendication 7, **caractérisée en ce que** le capteur (140) de pression d'accumulation détecte exclusivement les valeurs de pression dans le conduit (104) de capteur du côté (26) du non filtrat, et le capteur (86) de pression différentiel, les valeurs de pression des deux conduits (104, 134) de capteur, en mettant en communication fluidique l'autre conduit (134) de capteur en permanence avec le côté (28) de filtrat.
